# EUROPÄISCHE PATENTSCHRIFT

(11) **EP 1 271 735 B1**
(45) Veröffentlichungstag und Bekanntmachung des Hinweises auf die Patenterteilung: **22.11.2006**
(21) Anmeldenummer: 02011793.3
(22) Anmeldetag: 28.05.2002
(51) Int. Cl.: H02G 3/32

(54) **Halter für Kabelkanäle**
Raceway holder
Fixation de goulotte

(30) Priorität: 21.06.2001 DE 10130073
(43) Veröffentlichungstag der Anmeldung: 02.01.2003
(73) Patentinhaber: Hager Electro GmbH, 66131 Saarbrücken (DE)
(72) Erfinder: Amendola, Ettore, 66131 Saarbrücken (DE)
(74) Vertreter: Bernhardt, Winfrid

(56) Entgegenhaltungen:
- DE-A- 19 844 582
- US-A- 2 455 141
- US-A- 3 053 494

## Beschreibung

Die Erfindung betrifft einen Halter für Kabelkanäle in elektrischen Verteilern oder dergleichen, mit einem den Kabelkanal wenigstens über einen Teil seines Umfangs umgreifenden Halteteil, welcher, in Kanallängsrichtung gesehen, eine U-Form mit U-Schenkeln und einem die U-Schenkel verbindenden U-Steg aufweist, wobei der U-Steg zur Anpassung der Griffweite an unterschiedliche Kanalbreiten in seiner Länge verstellbar ist und der Halteteil zwei Winkelteile mit je einem den U-Steg bildenden Abschnitt umfasst, von denen ein Abschnitt eine Führung und der andere Abschnitt einen in der Führung bewegbaren Schieber bildet

Kabelkanalhalter in U-Form werden in Verteilerkästen an Trägerschienen befestigt, wo sie zur Halterung im Querschnitt rechteckiger Kabelkanäle dienen, die an gegenüberliegenden Längsseiten zu den Längsseiten quer verlaufende Schlitzöffnungen zur seitlichen Herausführung von Kabeln aus dem Kabelkanal aufweisen. Der Halteteil des Halters greift mit Rastvorsprüngen in die Schlitzöffnungen an deren dem Halteteil zugewandten Ende ein, wobei die Rastvorsprünge den Endrand der Schlitzöffnungen unter Bildung eines Formschlusses zwischen Halter und Kabelkanal übergreifen.

Ein der Aufhängung eines Kabelkanals dienender Kabelkanalhalter mit den eingangs genannten Merkmalen geht aus der US-A-2 455 141 hervor. Einer der den U-Steg bildenden Abschnitte weist im Querschnitt selbst eine U-Form auf und der andere den U-Steg bildende Abschnitt umfasst zwei parallele Schenkel, welche seitlich an den U-Schenkeln des ersten Abschnitts geführt sind. Auf ihrer dem ersten Abschnitt abgewandten Seite liegen diese parallele Schenkel gegen eine Wand des Kabelkanals an. Der Kabelkanal wird formschlüssig zwischen zwei mit dem U-Steg verbundenen U-Schenkeln gehalten, wobei eine Klemmkraft mittels einer die beiden Abschnitte zusammenziehenden Klemmschraube erzeugt wird. Die genannte Wand des Kabelkanals bildet einen Gegenhalter für die parallelen Schenkel.

Der vorliegenden Erfindung liegt die Aufgabe zugrunde, einen neuen Kabelkanalhalter der eingangs erwähnten Art zu schaffen, welcher bei vereinfachter Konstruktion eine bequemere Montage von Kabelkanälen ermöglicht.

Der diese Aufgabe lösende Halter für Kabelkanäle nach der Erfindung ist dadurch gekennzeichnet, dass die Führung als den Schieber in der Art eines Schrankeinschubs aufnehmendes, den Schieber allseitig führendes Schieberfach ausgebildet ist.

Durch einen solchen Kabelkanalhalter lässt sich mit geringem Aufwand durch Einführen des Schiebers in das Schieberfach montieren und darin befestigen und die erforderliche Griffseite von selbst einstellt.

Vorteilhaft können die gegeneinander bewegbaren Winkelteile zur Fixierung einer gewünschten Griffweite aneinander einrasten, wobei zweckmäßig eine zur weiteren Verstellung der Griffweite lösbare Rastung vorgesehen ist.

In der bevorzugten Ausführungsform der Erfindung lösst sich der Halteteil in Formschlusseingriff mit dem Kabelkanal bringen, und es sind mehrere, wahlweise verwendbare Schieberfächer zur Anpassung des Halteteils an am Kabelkanal unterschiedlich angeordnete Eingriffselemente vorgesehen. So kann der genannte, die Führung aufweisende Abschnitt z. B. mit zwei Führungsfächern versehen sein, um Eingriffselemente, die an den U-Schenkeln der Winkelteile vorgesehen sind, unterschiedlich in bezug auf den Kabelkanal zu positionieren.

In weiterer vorteilhafter Ausgestaltung der Erfindung sind an dem Halteteil oder/und einem Fußteil weitere Halteeinrichtungen für einen von dem Kabelkanal abzweigenden weiteren Kabelkanal vorgesehen. Hierzu sind insbesondere durch Vorsprünge Halteschlitze gebildet, in welche der weitere Kabelkanal mit einem an der Stirnseite des Kanals gebildeten Endrand der Kanalwand einschiebbar ist.

Zweckmäßig sind an dem Halteteil Sollbruchstellen für die Bildung eines Kobeldurchgangs von dem Kabelkanal zu dem weiteren Kabelkanal vorgesehen.

In der bevorzugten Ausführungsform der Erfindung ist ein Fußteil für die Verbindung des Halters mit einem Trägerteil des Verteilers gebildet und der Halteteil ist an dem Fußteil wahlweise in unterschiedlichen Abständen zum Trägerteil anbringbar. Bei dem Trägerteil kann es sich um eine Trägerschiene handeln, zu welcher der Kabelkanal parallel verläuft, wobei durch die unterschiedlichen Verbindungsmöglichkeiten von Halteteil und Fußteil der Kabelkanal in unterschiedlichen Abständen parallel zu der Trägerschiene verlegt werden kann.

Die Erfindung soll nun anhand eines Ausführungsbeispiels und der beiliegenden, sich auf dieses Ausführungsbeispiel beziehenden Zeichnungen näher erläutert werden. Es zeigen:
- Fig. 1: eine Teilansicht eines Verteilerkastens, in welchem Kabelkanalhalter nach der vorliegenden Erfindung verwendet sind,
- Fig. 2: eine weitere Teilansicht eines Verteilerkastens mit Kabelkanalhaltern nach der Erfindung,
- Fig. 3: eine Explosionsdarstellung des in den Fig. 1 und 2 gezeigten Kabelkanalhalters in einer perspektivischen Ansicht, und
- Fig. 4: eine zu der perspektivischen Ansicht von Fig. 3 um 90° gedrehte perspektivische Ansicht.

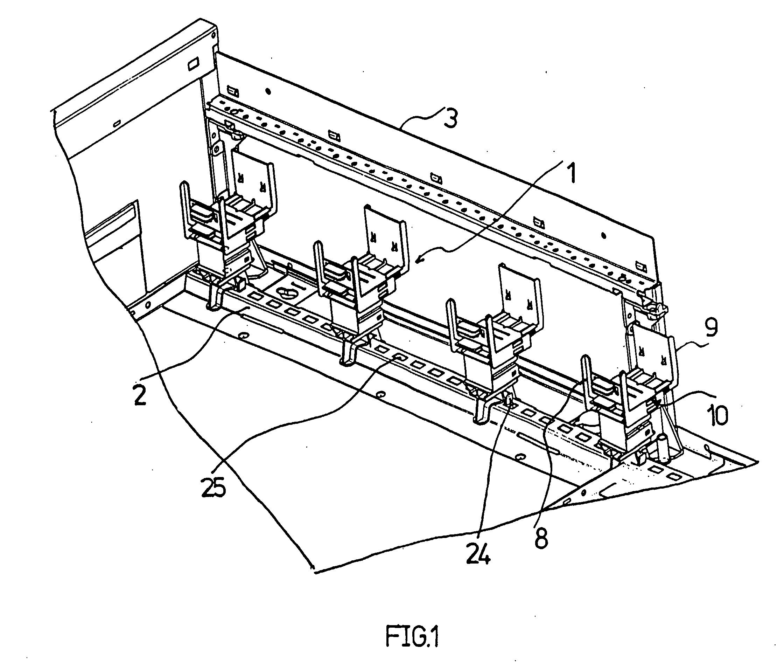

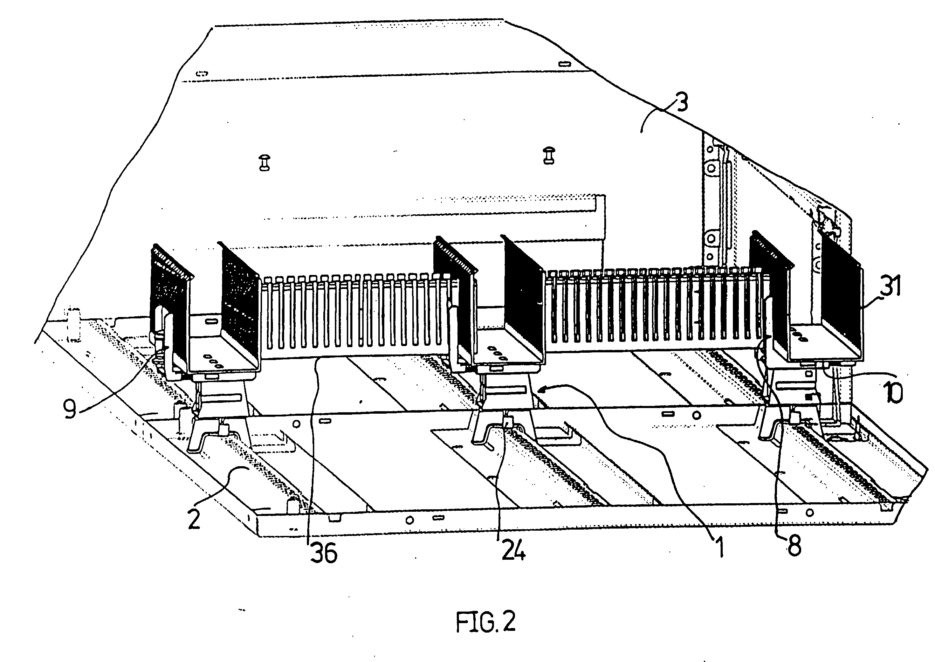

Mit dem Bezugszeichen 1 sind in den Fig. 1 und 2 Kabelkanalhalter bezeichnet, welche in einem Verteilerkasten 3 an einer Trägerschiene 2 befestigt sind.

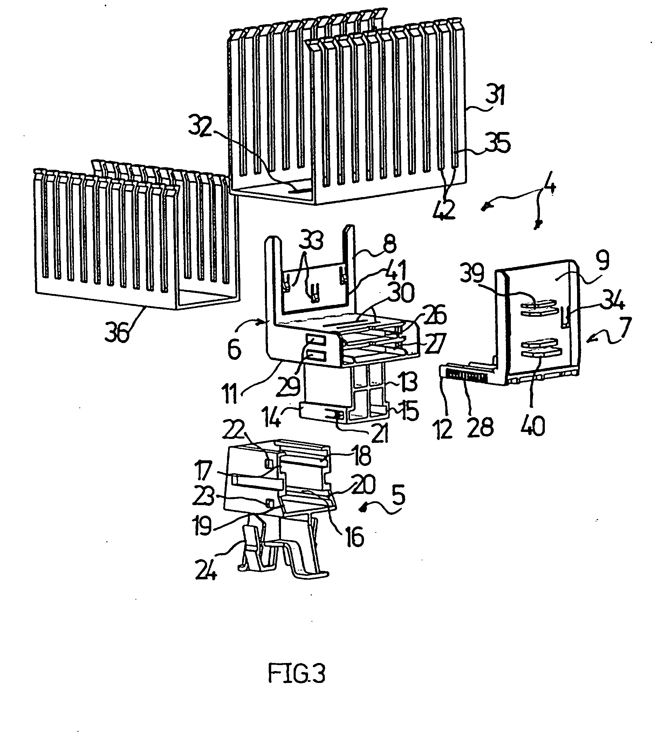

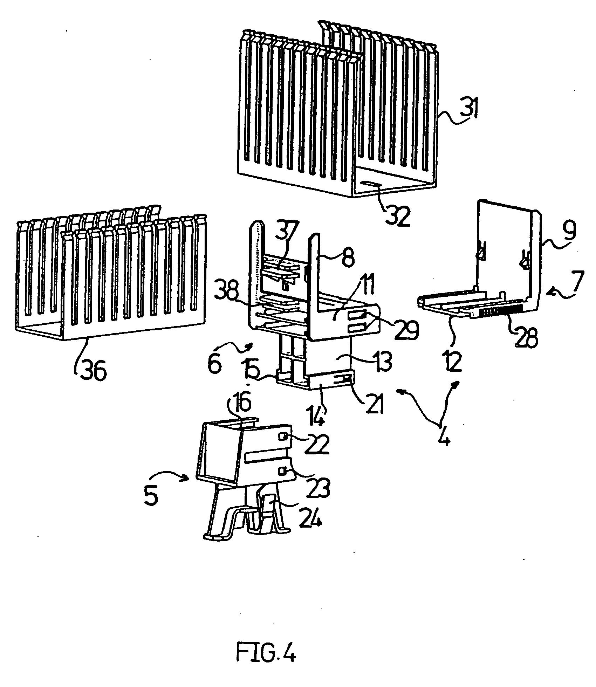

Wie aus den Fig. 3 und 4 hervorgeht, besteht der Kabelkanalhalter 1 aus einem Halteteil 4 und einem Fußteil 5.

Der Halteteil 4 ist aus zwei Winkelteilen 6 und 7 derart zusammensetzbar, dass er in Längsrichtung des Kabelkanals gesehen, eine U-Form mit U-Schenkeln 8 und 9 und einem U-Steg 10 bildet.

Jedes der Winkelteile 6 und 7 weist einen Abschnitt 11 bzw. 12 zur Bildung des U-Stegs 10 auf. An dem Abschnitt 11 des Winkelteils 6 ist auf seiner dem Trägerfuß 5 zugewandten Seite ein Ansatz 13 mit seitlich vorstehenden Schienen 14 und 15 angebracht. Zur Vermeidung von Materialhäufungen ist der Ansatz 13 weitgehend hohl ausgebildet.

Der Ansatz 13 ist in eine Ausnehmung 16 an dem Fußteil 5 einschiebbar, wobei die Schienen 14,15 wahlweise in jeweils einander gegenüberliegenden Führungsrillen 17,18 oder 19,20 gleiten können. An der Schiene 14 und 15 ist jeweils eine Rastnase 21 für den Eingriff in ein Rastloch 22 bzw. 23 am Fußteil 5 gebildet.

Wie aus den Fig. 1 und 2 hervorgeht, ist durch den Fußteil 5 ein Sattel gebildet, mit welchem er auf der Trägerschiene 2 aufsitzt, wobei der Fußteil an der Trägerschiene durch Rastbügel 24 befestigt ist, welche in Öffnungen 25 an der Trägerschiene eingreifen.

In dem Abschnitt 11 des Winkelteils 6 sind Fächer 26 und 27 vorgesehen, welche jeweils eine Führung für den Abschnitt 12 des Winkelteils 7 bilden, wobei sich der Abschnitt 12 als Schieber in einem der Führungsfächer 26,27 bewegen lässt.

An dem Abschnitt 12 bzw. dem Schieber ist eine Reihe 28 von Rastvorsprüngen gebildet, welche beim Verschieben in dem Fach 26 oder 27 mit einem von zwei in dem Abschnitt 11 des Winkelteils 6 gebildeten Rastelementen 29 in Eingriff steht.

Auf seiner dem Ansatz 13 abgewandten Seite weist der Abschnitt 11 Langlöcher 30 für die Befestigung eines Kabelkanals 31 mit rechteckigem Querschnitt auf, welcher mit entsprechenden Langlöchern 32 versehen ist. Sowohl an dem U-Schenkel 8 als auch an dem U-Schenkel 9 sind Rastnasen 33 bzw. 34 für den Eingriff in Schlitzausnehmungen 35 in dem Kabelkanal 31 gebildet, wobei sich die Schlitzausnehmungen quer zur Kabelkanallängsrichtung an gegenüberliegenden Längsseiten des Kabelkanals 31 erstrecken. Wie insbesondere aus Fig. 3 hervorgeht, sind an dem U-Schenkel 8 Nasen 33 in unterschiedlicher Höhe vorgesehen, um Kabelkanäle verwenden zu können, deren Schlitzausnehmungen 34 mit einem Endrand 42 unterschiedlich weit an die dem U-Steg 10 zugewandte Seite des Kabelkanals 31 heranreichen.

Sowohl von dem U-Schenkel 8 als auch von dem U-Schenkel 9 erstrecken sich Vorsprünge, die jeweils einen Halteschlitz 37, 38, 39 bzw. 40 für einen weiteren Kabelkanal 36 bilden.

Mit dem Bezugszeichen 41 ist eine Sollbruchlinie bezeichnet, die es ermöglicht, ein die Rastnasen 33 tragendes Feld aus dem U-Schenkel 8 herauszubrechen.

Bei der Montage von Kabelkanälen wird zunächst der Fußteil 5 auf die Trägerschiene 2 des Verteilerkastens 3 aufgesetzt, wobei die Rastbügel 24 in die Öffnungen 25 der Trägerschiene 2 eingreifen und in die Trägerschiene 2 einrasten.

Danach wird das Winkelteil 6 mit seinem Ansatz 13 in die Ausnehmung 16 des Fußteils 5 eingeschoben, wobei für die Trägerschienen 14 und 15 wahlweise das Führungsrillenpaar 17,18 oder das Führungsrillenpaar 19,20 ausgewählt wird, je nach gewünschtem Abstand des U-Stegs 10 von der Trägerschiene 2. Die Rastnase 21 rastet dann entweder in dem Rastloch 22 oder dem Rastloch 23 ein, um das Fußteil 5 in der Ausnehmung 16 zu fixieren.

Der Halter wird vervollständigt, indem das Winkelteil 7 wahlweise in eines der Führungsfächer 26 oder 27 eingeführt wird, wobei eine der Rastnasen 29 an der Reihe 28 von Rastvorsprüngen jeweils zwischen zwei Rastvorsprüngen einrastet, wobei das Winkelteil 7 an jeder Vielzahl von Raststellen an dem Winkelteil 6 fixierbar ist. Die Rastung ist zur weiteren Verstellung bei entsprechendem Kraftaufwand lösbar. Die eng beieinander liegenden Rasterstellen lassen eine nahezu kontinuierliche Verstellung zu.

Je nach Art des Kabelkanals 31 bzw. je nach Größe des Abstandes des unteren Endrandes 42 der Schlitzausnehmung 35 zu der dem U-Steg zugewandten Seite des Kabelkanals 31 kann entweder das Führungsfach 26 oder 27 zur Aufnahme des Abschnitts 12 des Winkelteils 7 ausgewählt werden, wobei die Nase 34 gerade hinter dem genannten Endrand 42 zum Eingriff in die Schlitzausnehmung 35 kommt. Auf der gegenüberliegenden Seite des Kabelkanals 31 greifen die Nasen 33 in die entsprechenden Schlitzausnehmungen 35 ein, wobei bei kürzeren Schlitzausnehmungen die oberen Nasen 33 den Endrand 42 gerade hintergreifen, während die untere Nase 33 nach außen gebogen bleibt.

Abschließend erfolgt eine Fixierung des Kabelkanals 31 mittels Verschraubung mit dem U-Steg 10, wozu das Langloch 32 in dem Kabelkanal 31 und, je nach Kanalbreite, eines der Langlöcher 30 an dem U-Steg 10 genutzt werden.

Um den Kabelkanal 36 zu montieren, kann einer der durch Vorsprünge gebildete Halteschlitze 37 bis 40 genutzt werden, wobei ein Endrand der Kanalwand an der Stirnseite des Kanals 36 in den Halteschlitz eingeschoben wird. Bei Verwendung des unteren Halteschlitzes 37 läßt sich das die Nasen 33 tragende Feld entlang der Sollbruchlinie 41 herausbrechen, um einen Durchgang für Kabel zu schaffen, welche aus dem Kabelkanal 31 durch die Schlitzausnehmungen 35 hindurch abgezweigt und in den Kanal 36 geführt werden.

Entsprechende Sollbruchlinien und weitere Rastnasen könnten auch an dem Winkelteil 7 vorgesehen sein.

## Patentansprüche

1. Halter für Kabelkanäle in elektrischen Verteilern (3) oder dergleichen, mit einem den Kabelkanal (31) wenigstens über einen Teil seines Umfangs umgreifenden Halteteil (4), welcher, in Kanallängsrichtung gesehen, eine U-Form mit U-Schenkeln (8, 9) und einem die U-Schenkel verbindenden U-Steg (10) aufweist, wobei der U-Steg (10) zur Anpassung der Griffweite an unterschiedliche Kanalbreiten in seiner Länge verstellbar ist und der Halteteil (4) zwei Winkelteile (6, 7) mit je einem den U-Steg (10) bildenden Abschnitt (11,12) umfasst, von denen ein Abschnitt (11) eine Führung und der andere Abschnitt (12) einen in der Führung bewegbaren Schieber bildet,
**dadurch gekennzeichnet,**
**dass** die Führung als den Schieber in der Art eines Schrankeinschubs aufnehmendes, den Schieber allseitig führendes Schieberfach (26, 27) ausgebildet ist.

2. Halter nach der Anspruch 1.
**dadurch gekennzeichnet,**
**dass** die Winkelteile (6,7) zur Fixierung in einer gewünschten Griffweite aneinander einrastbar sind.

3. Halter noch Anspruch 1 oder 2,
**dadurch gekennzeichnet,**
**dass** sich der Halteteil (4) in Formschlusseingriff mit dem Kabelkanal (31) bringen lässt und in dem die Führung bildenden Abschnitt (11) mehrere, wahlweise verwendbare Schieberfächer (26,27) zur Anpassung des Halteteils (4) an am Kabelkanal (31) in unterschiedlicher Weise angeordnete Eingriffselemente (35) vorgesehen sind.

4. Halter nach Anspruch 3,
**dadurch gekennzeichnet,**
**dass** an dem die Führung bildenden Abschnitt (11) zwei Schieberfächer (26,27) gebildet sind.

5. Halter nach einem der Ansprüche 1 bis 4
**dadurch gekennzeichnet,**
**dass** an dem Halteteil (4) oder/und einem Fußteil (5) weitere Halteeinrichtungen (37-40) für einen von dem Kabelkanal (31) abzweigenden weiteren Kabelkanal (36) vorgesehen sind.

6. Halter nach Anspruch 5,
**dadurch gekennzeichnet,**
**dass** an dem Halteteil (4) eine Sollbruchstelle (41) für die Bildung eines Kabeldurchgangs von dem Kabelkanal (31) zu dem weiteren Kabelkanal (36) vorgesehen ist.

7. Halter nach einem der Ansprüche 1 bis 6.
**dadurch gekennzeichnet,**
**dass** ein Fußteil (5) für die Verbindung des Halters (1) mit einem Trägerteil (2) des Verteilers (3) vorgesehen und der Halteteil (4) an dem Fußteil (5) wahlweise in unterschiedlichen Abständen zu dem Trägerteil (2) anbringbar ist.

## Claims

1. Holder for cable channels in electrical distribution boards (3) or the like, having a holding part (4), which surrounds the cable channel (31) at least over part of its circumference and has, viewed in the longitudinal direction of the channel, a U shape with U limbs (8, 9) and a U web (10) connecting the U limbs, it being possible for the U web (10) to be adjusted in terms of its length in order to match the grip width to different channel widths, and the holding part (4) comprising two angled parts (6, 7), each having a section (11, 12) forming the U web (10), of which one section (11) forms a guide and the other section (12) forms a slide which can move in the guide, **characterized in that** the guide is in the form of a slide compartment (26, 27), which accommodates the slide in the manner of a cabinet insert and guides the slide on all sides.

2. Holder according to Claim 1, **characterized in that** the angled parts (6, 7) can be latched in on one another for the purpose of being fixed at a desired grip width.

3. Holder according to Claim 1 or 2, **characterized in that** the holding part (4) can be brought into interlocking engagement with the cable channel (31), and a plurality of slide compartments (26, 27), which can optionally be used, are provided in the section (11) forming the guide for the purpose of matching the holding part (4) to engagement elements (35) arranged in a variety of ways on the cable channel (31).

4. Holder according to Claim 3, **characterized in that** two slide compartments (26, 27) are formed on the section (11) forming the guide.

5. Holder according to one of Claims 1 to 4, **characterized in that** further holding devices (37-40) for a further cable channel (36) branching off from the cable channel (31) are provided on the holding part (4) and/or a base part (5).

6. Holder according to Claim 5, **characterized in that** a desired breaking point (41) is provided on the holding part (4) for the purpose of forming a cable duct from the cable channel (31) to the further cable channel (36).

7. Holder according to one of Claims 1 to 6, **characterized in that** a base part (5) is provided for the purpose of connecting the holder (1) to a carrier part (2) of the distribution board (3), and the holding part (4) can be attached to the base part (5) optionally at different distances from the carrier part (2).

## Revendications

1. Support pour goulotte à câble dans des distributeurs électriques (3) ou similaires, comprenant une pièce de support (4) qui entoure la goulotte à câble (31) sur au moins une partie de sa périphérie et qui, vue dans la direction longitudinale de la goulotte, présente une forme en U avec des branches (8, 9) et une âme (10) qui relie les branches du U, ladite âme (10) du U étant réglable quant à sa longueur pour adapter la largeur de préhension à différentes largeurs de goulotte, et la pièce de support (4) comprend deux pièces en équerre (6, 7) avec chacune un tronçon (11, 12) qui forme l'âme (10) du U, parmi lesquels un tronçon (11) forme un guidage et l'autre tronçon (12) forme un coulisseau déplaçable dans le guidage,
**caractérisé en ce que** le guidage est réalisé à la manière d'un casier à coulisseau (26, 27) qui reçoit le coulisseau à la manière d'un tiroir d'armoire et qui guide le coulisseau sur tous les côtés.

2. Support selon la revendication 1,
**caractérisé en ce que** les pièces en équerre (6, 7) peuvent être enclenchées l'une par rapport à l'autre pour leur fixation à une largeur de préhension souhaitée.

3. Support selon la revendication 1 ou 2,
**caractérisé en ce que** la pièce de support (4) peut être amenée en engagement à coopération de formes avec la goulotte à câble (31), et **en ce qu'**il est prévu, dans le tronçon (11) qui forme le guidage, plusieurs casiers à coulisseaux (26, 27) utilisables au choix pour l'adaptation de la pièce de support (4) à des éléments d'engagement (35) agencés de différentes manières sur la goulotte à câble (31).

4. Support selon la revendication 3,
**caractérisé en ce que** deux casiers à coulisseaux (26, 27) sont formés sur le tronçon (11) formant le guidage.

5. Support selon l'une des revendications 1 à 4,
**caractérisé en ce que** d'autres dispositifs de maintien (37-40) sont prévus sur la pièce de support (4) et/ou sur une pièce de pied (5) pour une autre goulotte à câble (36) ramifiée depuis la goulotte à câble (31).

6. Support selon la revendication 5,
**caractérisé en ce qu'**un emplacement de rupture de consigne (41) est prévu sur la pièce de support (4) pour la réalisation d'une traversée de câble allant de la goulotte à câble (31) à l'autre goulotte à câble (36).

7. Support selon l'une des revendications 1 à 6,
**caractérisé en ce qu'**il est prévu une partie de pied (5) pour la liaison du support (1) avec une pièce porteuse (2) du distributeur (3), et la pièce de support (4) peut être montée sur la partie de pied (5) au choix à des distances différentes vis-à-vis de la pièce porteuse (2).
